# EUROPEAN PATENT APPLICATION

(11) **EP 4 764 088 A1**
(43) Date of publication of application: **24.06.2026**
(21) Application number: 25223177.4
(22) Date of filing: 12.12.2025
(51) Int. Cl.: E02F 9/08, E02F 9/20

(54) **ELECTRIC WORKING MACHINE**

(30) Priority: 13.12.2024 JP 2024219037
(71) Applicant: Yanmar Holdings Co., Ltd., Osaka (JP)
(72) Inventor: NOMURA, Kotaro, Chikugo-shi (JP)
(74) Representative: Sekiguchi, Kazuya

(57) **Abstract**

[Problem] To provide an electric working machine capable of preventing loosening of connection between a battery unit and a cable with a compact configuration.

[Solution] A hydraulic excavator as an electric working machine includes an electric motor, a battery unit that stores electric power for driving the electric motor, a cable connected to the battery unit, and a restricting portion disposed to face the battery unit. The restricting portion restricts movement of the cable.

## Description

### TECHNICAL FIELD

The present invention relates to an electric working machine.

### BACKGROUND ART

An electric working machine including an electric motor, a battery unit that stores electric power for driving the electric motor, and a connection cable connected to the battery unit is known as a conventional technique (for example, see Patent Document 1).

### PRIOR ART DOCUMENT

### PATENT DOCUMENT

Patent Document 1: JP-A-2023-160537

### SUMMARY OF INVENTION

### TECHNICAL PROBLEM

When a cable (for example, the connection cable) connected to the battery unit greatly moves (for example, it swings or vibrates) due to vibration, impact, or the like generated during work of the electric working machine, there is a risk that the connection between the battery unit and the cable is loosened. In a case where measures for preventing the loosening are taken particularly in a small electric working machine, it is desirable to reduce the size of the measures because the arrangement space of members and the like is limited.

The present invention has been made to solve the above problem, and an object thereof is to provide an electric working machine capable of preventing loosening of connection between a battery unit and a cable with a compact configuration.

### SOLUTION TO PROBLEM

An electric working machine according to one aspect of the present invention includes an electric motor, a battery unit that stores electric power for driving the electric motor, a cable connected to the battery unit, and a restricting portion disposed to face the battery unit, in which the restricting portion restricts movement of the cable.

### ADVANTAGEOUS EFFECTS OF INVENTION

According to the above configuration, loosening of the connection between the battery unit and the cable can be prevented with a compact configuration.

### BRIEF DESCRIPTION OF DRAWINGS

Fig. 1 is a side view illustrating a schematic configuration of a hydraulic excavator which is an example of an electric working machine according to an embodiment of the present invention;
Fig. 2 is a block diagram schematically illustrating configurations of an electric system and a hydraulic system of the hydraulic excavator;
Fig. 3 is a left rear perspective view illustrating a fixing structure of a battery unit provided in the hydraulic excavator;
Fig. 4 is a left upper perspective view illustrating the fixing structure of the battery unit;
Fig. 5 is a right lower perspective view illustrating the fixing structure of the battery unit;
Fig. 6 is a left rear perspective view illustrating a configuration of a restricting portion included in the fixing structure of the battery unit;
Fig. 7 is a right front perspective view illustrating the configuration of the restricting portion;
Fig. 8 is a side view illustrating a connection configuration of the battery unit;
Fig. 9 is a left side view illustrating a routing structure of a cable connected to the battery unit; and
Fig. 10 is a right side view illustrating the routing structure of the cable.

### DESCRIPTION OF EMBODIMENTS

An embodiment of the present invention will be described below with reference to the drawings.

### [1. Schematic Configuration of Electric Working Machine]

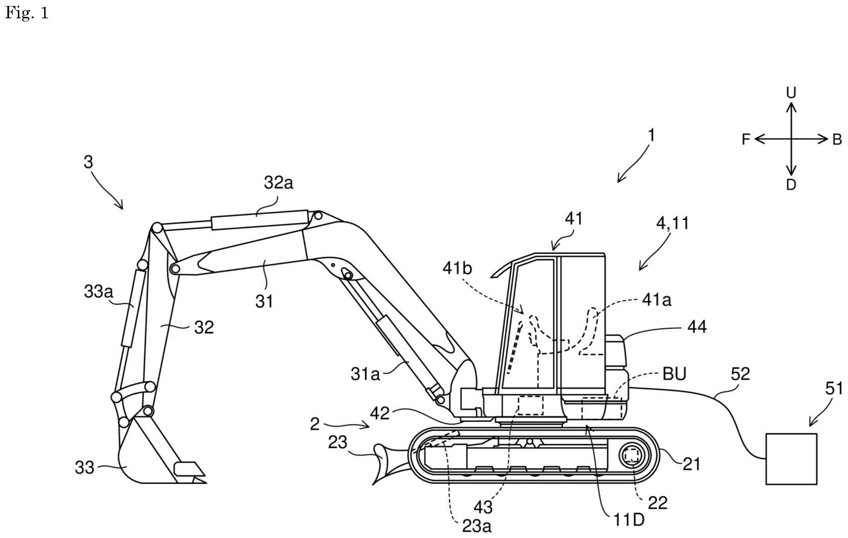

Fig. 1 is a side view illustrating a schematic configuration of a hydraulic excavator 1 which is an example of an electric working machine according to an embodiment of the present invention. The hydraulic excavator 1 (also called an electric excavator) includes a lower traveling body 2, working equipment 3, and an upper turning body 4.

Here, directions in the present embodiment are defined as follows. A direction in which an operator (driver) sitting on a driver's seat 41a disposed in an operation unit 41 of the upper turning body 4 faces the front is defined as "front", and the opposite direction thereof is defined as "rear". In a state where the upper turning body 4 is not turning with respect to the lower traveling body 2 (turning angle: 0 degrees), a front-rear direction of the upper turning body 4 coincides with a front-rear direction of the lower traveling body 2. In the drawings, the hydraulic excavator 1 in a state where the upper turning body 4 is not turning with respect to the lower traveling body 2 is illustrated. In addition, a left side as viewed from the operator sitting on the driver's seat 41a is defined as "left", and a right side is defined as "right". Furthermore, a gravity direction perpendicular to the front-rear direction and the left-right direction is defined as an up-down direction, an upstream side in the gravity direction is defined as "up", and a downstream side is defined as "down". In the drawings, as necessary, the front is denoted by "F", the rear is denoted by "B", the left is denoted by "L", the right is denoted by "R", the upper side is denoted by "U", and the lower side is denoted by "D".

The lower traveling body 2 includes a pair of left and right crawlers 21 and a pair of left and right traveling motors 22. Each of the traveling motors 22 is configured using a hydraulic motor. The left and right traveling motors 22 drive the left and right crawlers 21, respectively, so that the hydraulic excavator 1 can be moved forward and backward. The lower traveling body 2 is provided with a blade 23 for performing ground leveling work and a blade cylinder 23a. The blade cylinder 23a is configured using a hydraulic cylinder, and rotates the blade 23 in the up-down direction.

The working equipment 3 includes a boom 31, an arm 32, and a bucket 33. By independently driving the boom 31, the arm 32, and the bucket 33, excavation work of earth and sand or the like can be performed.

The boom 31 is rotated by a boom cylinder 31a. The boom cylinder 31a is supported at a base end portion thereof by a front portion of the upper turning body 4 and is movable so as to freely extend and contract. The arm 32 is rotated by an arm cylinder 32a. The arm cylinder 32a is supported at a base end portion thereof by the boom 31 and is movable so as to freely extend and contract. The bucket 33 is rotated by a bucket cylinder 33a. The bucket cylinder 33a is supported at a base end portion thereof by the arm 32 and is movable so as to freely extend and contract. Each of the boom cylinder 31a, the arm cylinder 32a, and the bucket cylinder 33a is configured using a hydraulic cylinder.

The upper turning body 4 is an example of a machine body 11. That is, the hydraulic excavator 1 includes the machine body 11 (the upper turning body 4 in the present embodiment). The upper turning body 4 is located above the lower traveling body 2 and is provided to be turnable with respect to the lower traveling body 2 via a turning bearing (not illustrated). The operation unit 41, a turning frame 42, a turning motor 43, a machine room 44, and the like are disposed in the upper turning body 4.

The upper turning body 4 turns with respect to the lower traveling body 2 by driving of the turning motor 43 disposed in the turning frame 42. The turning frame 42 includes a plurality of metal members coupled by welding or the like, and is disposed at a bottom 11D of the machine body 11 (upper turning body 4). The turning motor 43 is configured using a hydraulic motor.

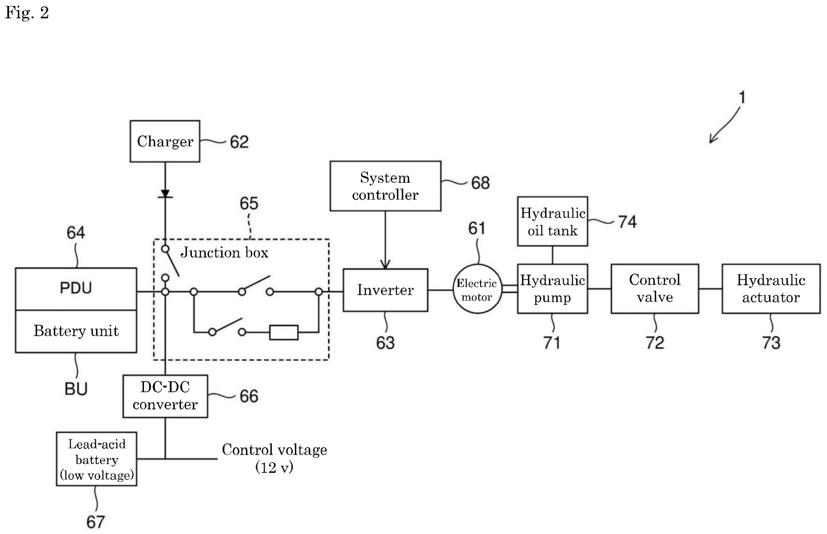

A hydraulic pump 71 (see Fig. 2) is further disposed in the upper turning body 4. The hydraulic pump 71 is driven by an electric motor 61 (see Fig. 2) inside the machine room 44. The hydraulic pump 71 supplies hydraulic oil (pressure oil) to hydraulic motors (for example, the left and right traveling motors 22 and the turning motor 43) and hydraulic cylinders (for example, the blade cylinder 23a, the boom cylinder 31a, the arm cylinder 32a, and the bucket cylinder 33a). The hydraulic motors and the hydraulic cylinders driven by the hydraulic oil supplied from the hydraulic pump 71 are collectively referred to as a hydraulic actuator 73 (see Fig. 2).

The driver's seat 41a is disposed in the operation unit 41. Various operation members 41b are disposed around the driver's seat 41a. The various operation members 41b include a lever, a switch, a pedal, and the like. When the operator sits on the driver's seat 41a and operates the various operation members 41b, the hydraulic actuator 73 is driven. As a result, it is possible to perform traveling of the lower traveling body 2, ground leveling work by the blade 23, excavation work by the working equipment 3, turning of the upper turning body 4, and the like.

A battery unit BU is disposed in the machine room 44. That is, the hydraulic excavator 1 includes the battery unit BU. The battery unit BU is configured using, for example, a lithium ion battery unit, and stores electric power. The battery unit BU may be configured by unitizing a plurality of batteries, or may be configured using a single battery cell. In addition, the upper turning body 4 is provided with a power supply port (not illustrated). The above power supply port and a commercial power source 51 as an external power source are connected via a power supply cable 52. As a result, the battery unit BU can be charged. Note that a fixing structure of the battery unit BU in the machine room 44 will be described later.

The hydraulic excavator 1 may have a configuration in which a hydraulic device such as the hydraulic actuator 73 and an actuator driven by electric power are used in combination. Examples of the actuator driven by electric power include an electric traveling motor, an electric cylinder, and an electric turning motor.

### [2. Configurations of Electric System and Hydraulic System]

Fig. 2 is a block diagram schematically illustrating configurations of an electric system and a hydraulic system of the hydraulic excavator 1. The hydraulic excavator 1 includes the electric motor 61, a charger 62, an inverter 63, a power drive unit (PDU) 64, a junction box 65, a DC-DC converter 66, a lead-acid battery 67, and a system controller 68. The system controller 68 is configured using an electronic control unit also called an ECU, and electrically controls each component of the hydraulic excavator 1.

The electric motor 61 is driven by electric power supplied from the battery unit BU via the junction box 65 and the inverter 63. That is, the battery unit BU stores electric power for driving the electric motor 61. The electric motor 61 is configured using a synchronous motor, an induction motor, or the like. The electric motor 61 is disposed inside the machine room 44 (see Fig. 1), particularly on the turning frame 42 (see Fig. 1).

The charger 62 converts an AC voltage supplied from the commercial power source 51 via the power supply cable 52 (see Fig. 1) into a DC voltage. The inverter 63 converts a DC voltage supplied from the battery unit BU into an AC voltage, and supplies the AC voltage to the electric motor 61. As a result, the electric motor 61 rotates. The AC voltage (current) is supplied from the inverter 63 to the electric motor 61 based on a rotation command output from the system controller 68.

The PDU 64 is a battery control unit that controls an internal battery relay to control input/output of the battery unit BU. The junction box 65 includes a charger relay, an inverter relay, a fuse, and the like. The voltage output from the charger 62 is supplied to the battery unit BU via the junction box 65 and the PDU 64. In addition, the voltage output from the battery unit BU is supplied to the inverter 63 via the PDU 64 and the junction box 65.

The DC-DC converter 66 steps down a high-voltage (for example, 300 V) DC voltage supplied from the battery unit BU via the junction box 65 to a low voltage (for example, 12 V). The lead-acid battery 67 stores electric power of a low-voltage DC voltage. In addition, the lead-acid battery 67 outputs the stored electric power. The low-voltage DC voltage output from the DC-DC converter 66 and the lead-acid battery 67 is supplied to the system controller 68, a blower fan (not illustrated), and the like.

A plurality of hydraulic pumps 71 are connected to a rotation shaft (output shaft) of the electric motor 61. The plurality of hydraulic pumps 71 include a variable displacement pump and a fixed displacement pump. Fig. 2 illustrates only one hydraulic pump 71 as an example. Each of the hydraulic pumps 71 is connected to a hydraulic oil tank 74 that accommodates (stores) hydraulic oil. The hydraulic pump 71 supplies the hydraulic oil in the hydraulic oil tank 74 to the hydraulic actuator 73 via a control valve 72. As a result, the hydraulic actuator 73 is driven. The control valve 72 is a direction switching valve that controls a flow direction and a flow rate of the hydraulic oil supplied to the hydraulic actuator 73.

### [3. Fixing Structure of Battery Unit]

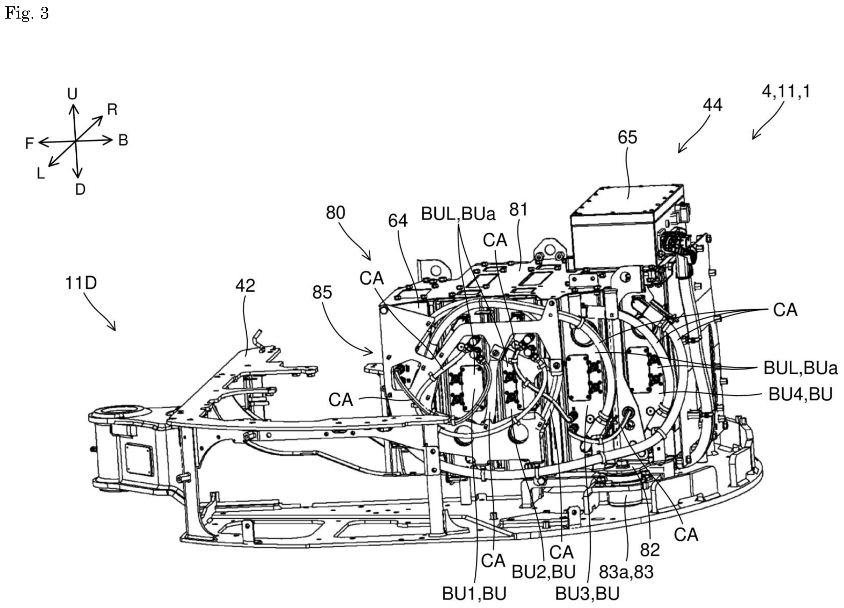

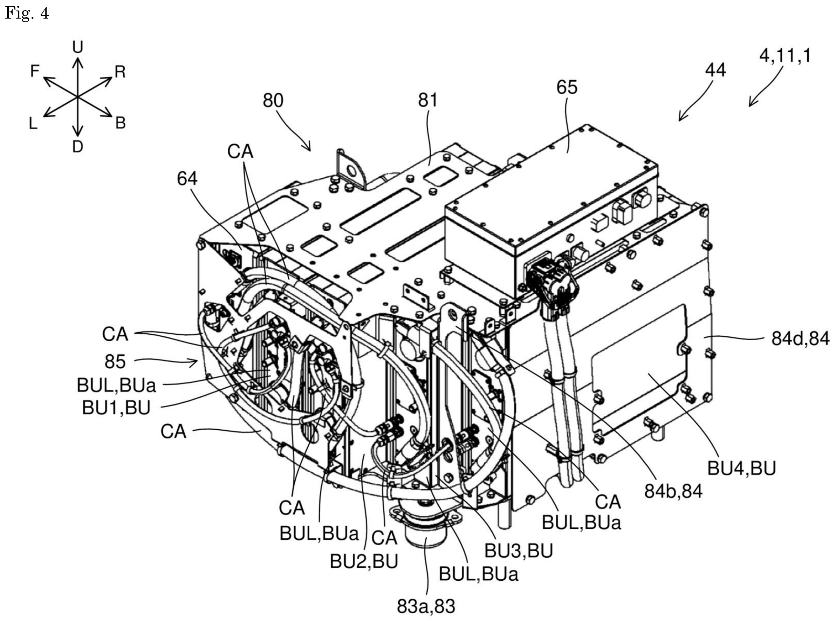

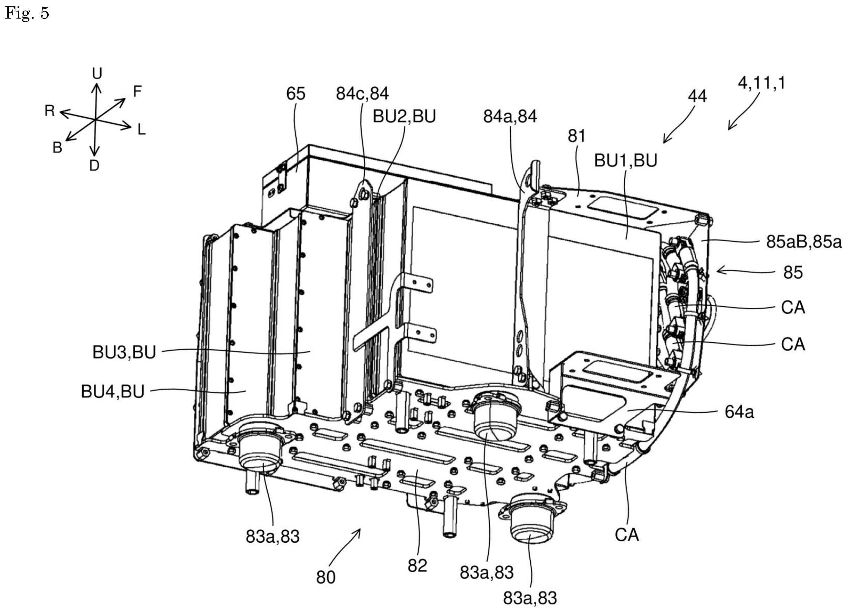

A fixing structure of the battery unit BU will be described with reference to Figs. 3, 4, and 5. Figs. 3, 4, and 5 are a left rear perspective view, a left upper perspective view, and a right lower perspective view illustrating the fixing structure of the battery unit BU. In Figs. 4 and 5, the turning frame 42 is not illustrated for the sake of convenience. In addition, in Fig. 5, the PDU 64 is not illustrated for the sake of convenience.

As illustrated particularly in Fig. 3, the battery unit BU is fixed to the turning frame 42 by a fixing mechanism 80. Specifically, the fixing mechanism 80 fixes the battery unit BU to a rear portion of the turning frame 42. However, the fixing mechanism 80 may fix the battery unit BU to a portion (for example, a front portion or a side portion) of the turning frame 42 other than the rear portion.

In the present embodiment, four battery units BU are provided. However, the number of the battery units BU is not limited to four, and may be, for example, one or plural other than four. The battery units BU have rectangular box-shaped outer shapes having the same size. However, the battery units BU may have different sizes, or may have an outer shape other than the rectangular box-shaped outer shape.

The plurality of (four in the present embodiment) battery units BU are located in parallel to one direction and are located side by side in a direction perpendicular to the one direction. In the present embodiment, the plurality of battery units BU are located in parallel to the left-right direction as the one direction, and are located side by side in the front-rear direction perpendicular to the left-right direction. In particular, a left side surface BUL of each of the battery units BU is located facing leftward. The left side surface BUL of the battery unit BU is an example of one side surface BUa of the battery unit BU. Another example of the one side surface BUa is a right side surface of the battery unit BU.

Here, when the above-described four battery units BU are particularly distinguished, they are referred to as a first battery unit BU1, a second battery unit BU2, a third battery unit BU3, and a fourth battery unit BU4 in order from the front to the rear.

A cable CA is connected to each of the battery units BU. The cable CA is routed inside the machine room 44. Therefore, the hydraulic excavator 1 includes the cable CA connected to the battery unit BU. Note that a routing structure of the cable CA will be described later.

As illustrated particularly in Figs. 4 and 5, the fixing mechanism 80 includes an upper plate 81, a lower plate 82, a support portion 83, a plurality of coupling members 84, and a restricting portion 85. That is, the hydraulic excavator 1 includes the upper plate 81, the lower plate 82, the support portion 83, the plurality of coupling members 84, and the restricting portion 85.

The upper plate 81 is formed of a metal plate-like member extending in the front-rear direction and the left-right direction. The upper plate 81 is disposed with a lower surface thereof being in contact with upper surfaces of the plurality of battery units BU. That is, the upper plate 81 is disposed above the plurality of battery units BU. Note that the junction box 65 is located on the upper plate 81 (particularly a rear portion of the upper plate 81).

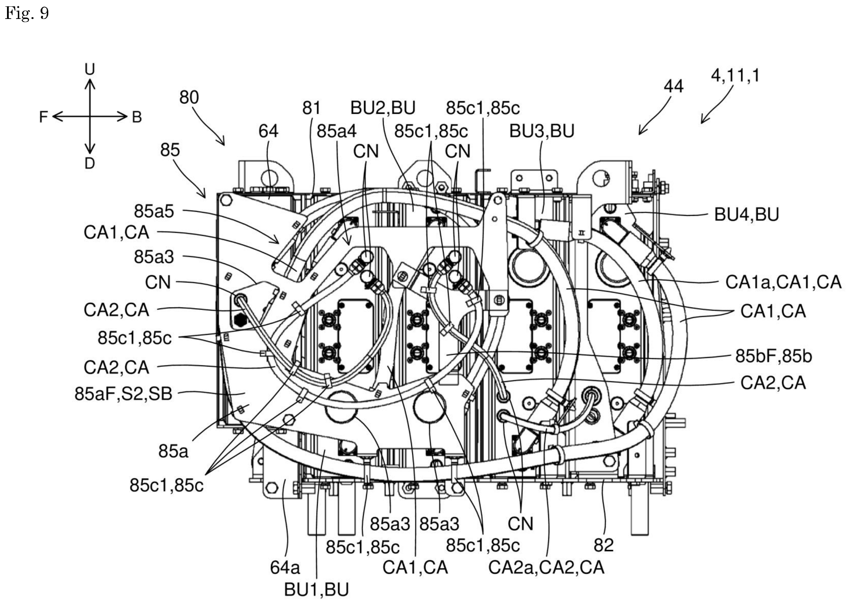

The lower plate 82 is formed of a metal plate-like member extending in the front-rear direction and the left-right direction. The lower plate 82 is disposed with an upper surface thereof being in contact with lower surfaces of the plurality of battery units BU. That is, the lower plate 82 is disposed below the plurality of battery units BU. In other words, the plurality of battery units BU are disposed on the lower plate 82. Specifically, the first battery unit BU1 and the second battery unit BU2 are disposed at the same position in the left-right direction (without being shifted from each other in the left-right direction) on the lower plate 82. The third battery unit BU3 is disposed on the lower plate 82 so as to be shifted rightward from the second battery unit BU2. The fourth battery unit BU4 is disposed on the lower plate 82 so as to be further shifted rightward from the third battery unit BU3. Note that the PDU 64 is located in front of the first battery unit BU1. A lower surface of the PDU 64 is fixed to a support stay 64a (see also Fig. 9 described later). The support stay 64a is fixed to the lower plate 82.

Therefore, the upper plate 81 and the lower plate 82 sandwich the plurality of battery units BU in the up-down direction. That is, the plurality of battery units BU are sandwiched by the upper plate 81 and the lower plate 82 in the up-down direction.

The support portion 83 supports the lower plate 82 on the turning frame 42. The support portion 83 includes a vibration-proof member 83a. As the vibration-proof member 83a, a vibration-proof structure obtained by combining a vibration-proof rubber, a stay, a housing, and the like can be used. Therefore, the lower plate 82 is supported by the machine body 11 (the turning frame 42 of the upper turning body 4 in the present embodiment) via the vibration-proof member 83a.

In the present embodiment, three support portions 83 are provided (particularly see Fig. 5). One of the three support portions 83 is coupled to a front end portion of the lower plate 82. One of the remaining two is coupled to a left rear end portion of the lower plate 82, and the other is coupled to a right rear end portion of the lower plate 82. Note that the number of the support portions 83 is not limited to three. For example, the number of the support portions 83 may be one or plural other than three. In addition, a portion of the lower plate 82 to which the support portion 83 is coupled is not limited to the above.

The upper plate 81 and the lower plate 82 are coupled via the plurality of coupling members 84 and the restricting portion 85. That is, the plurality of coupling members 84 and the restricting portion 85 each couple the upper plate 81 and the lower plate 82.

The plurality of coupling members 84 include a first coupling member 84a, a second coupling member 84b, a third coupling member 84c, and a fourth coupling member 84d. The first coupling member 84a couples the front end portions of the upper plate 81 and the lower plate 82 to each other. The second coupling member 84b couples the left rear end portions of the upper plate 81 and the lower plate 82 to each other. The third coupling member 84c couples right end portions of the upper plate 81 and the lower plate 82 to each other. The fourth coupling member 84d couples rear end portions of the upper plate 81 and the lower plate 82 to each other. The coupling between the upper plate 81 and each of the coupling members 84 and the coupling between the lower plate 82 and each of the coupling members 84 are each realized using a fastening member such as a bolt, but are not limited thereto. For example, at least one of the coupling between the upper plate 81 and each of the coupling members 84 and the coupling between the lower plate 82 and each of the coupling members 84 may be realized by joining by welding.

The restricting portion 85 couples left end portions of the upper plate 81 and the lower plate 82 to each other. More specifically, when the upper plate 81 and the lower plate 82 are coupled by the restricting portion 85, the restricting portion 85 configured to extend in the up-down direction is first disposed below the upper plate 81 (particularly the left end portion of the upper plate 81) and above the lower plate 82 (particularly the left end portion of the lower plate 82) in a left side view. That is, the restricting portion 85 is disposed between the upper plate 81 and the lower plate 82 in the up-down direction (see also Fig. 9 described later). Then, an upper end portion of the restricting portion 85 and the left end portion of the upper plate 81 are coupled to each other, and a lower end portion of the restricting portion 85 and the left end portion of the lower plate 82 are coupled to each other. Each of the above couplings is realized using a fastening member such as a bolt, but is not limited thereto. For example, at least one of the above couplings may be realized by joining by welding.

Therefore, the restricting portion 85 of the present embodiment is coupled to both the upper plate 81 and the lower plate 82. However, the restricting portion 85 is not limited to the above configuration, and may be coupled to any one of the upper plate 81 and the lower plate 82, for example. That is, the restricting portion 85 is coupled to at least one of the upper plate 81 and the lower plate 82.

Here, it is assumed that the hydraulic excavator 1 includes the upper plate 81 disposed above the battery unit BU, the lower plate 82 disposed below the battery unit BU, and the restricting portion 85, and at least a part of the restricting portion 85 is located above the upper plate 81. Then, it is necessary to secure a larger arrangement space of the upper plate 81, the lower plate 82, and the restricting portion 85 (arrangement space of the fixing mechanism 80) in the up-down direction than that in a case where the restricting portion 85 is located between the upper plate 81 and the lower plate 82 in the up-down direction.

In addition, it is assumed that at least a part of the restricting portion 85 is located below the lower plate 82 in a configuration similar to the above configuration. Then, it is necessary to secure a larger arrangement space of the upper plate 81, the lower plate 82, and the restricting portion 85 (arrangement space of the fixing mechanism 80) in the up-down direction than that in a case where the restricting portion 85 is located between the upper plate 81 and the lower plate 82 in the up-down direction.

Therefore, the following configuration is desirable from the viewpoint of eliminating the need to secure a large arrangement space of the upper plate 81, the lower plate 82, and the restricting portion 85 in the up-down direction (avoiding expansion of the above arrangement space) and arranging these members compactly in the up-down direction. That is, as in the present embodiment, the restricting portion 85 is desirably disposed between the upper plate 81 and the lower plate 82 in the up-down direction.

Note that the restricting portion 85 is not limited to be coupled to at least one of the upper plate 81 and the lower plate 82, and may be directly coupled to the turning frame 42 without being coupled to the lower plate 82, for example. That is, for example, the restricting portion 85 may be configured to extend upward from the turning frame 42.

The restricting portion 85 is used not only for coupling the upper plate 81 and the lower plate 82 but also for routing the cable CA connected to the battery unit BU. The restricting portion 85 is disposed leftward from the plurality of battery units BU. Specifically, the restricting portion 85 is disposed on the left side of the first battery unit BU1 and the second battery unit BU2. Hereinafter, a configuration of the restricting portion 85 will be described.

### [4. Configuration of Restricting Portion]

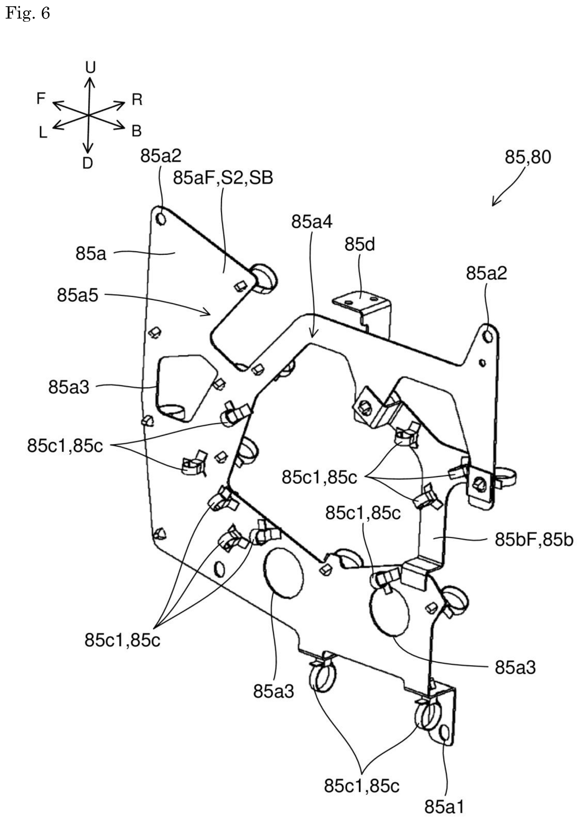

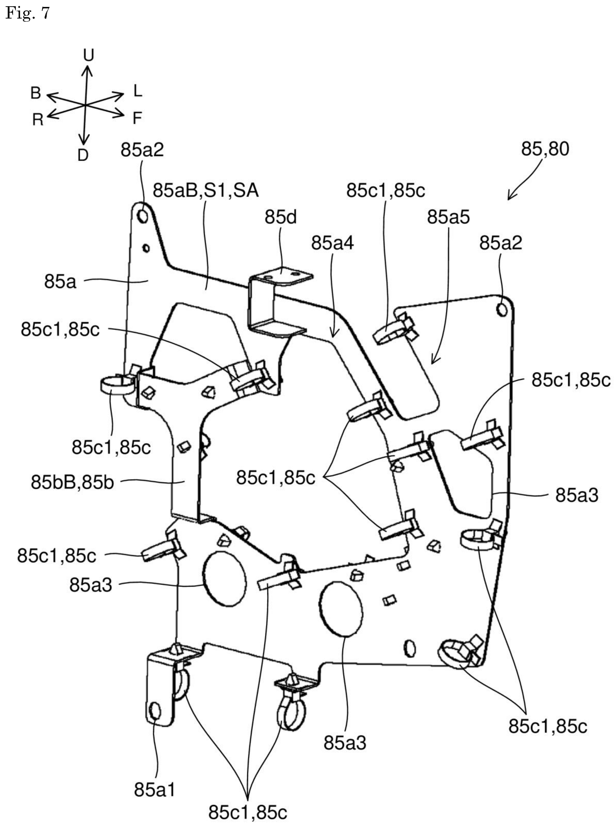

Figs. 6 and 7 are a left rear perspective view and a right front perspective view illustrating the configuration of the restricting portion 85. The restricting portion 85 includes a facing plate 85a, a reinforcing plate 85b, and a plurality of holding portions 85c.

The facing plate 85a is formed of a metal plate-like member extending in the up-down direction and the front-rear direction. A lower end portion of the facing plate 85a includes a part (a central portion and a rear end portion in the present embodiment) bent rightward. The part of the lower end portion bent rightward is further bent downward. One first through-hole 85a1 penetrating in the left-right direction is provided at the part of the lower end portion bent downward. However, the number of the first through-holes 85a1 is not limited to one, and may be, for example, plural. In addition, when a plurality of first through-holes 85a1 are provided, at least one first through-hole 85a1 may be provided at a position different from the above position (part of the lower end portion bent downward) in the facing plate 85a. The first through-hole 85a1 is used for coupling to the lower plate 82 (see Fig. 3 and the like).

The facing plate 85a is provided with, in addition to the first through-hole 85a1, a plurality of second through-holes 85a2 penetrating in the left-right direction similarly to the first through-hole 85a1. In the present embodiment, two second through-holes 85a2 are provided. However, the number of the second through-holes 85a2 is not limited to two, and may be, for example, one or plural other than two. The plurality of second through-holes 85a2 are used for coupling to the upper plate 81 (see Fig. 3 and the like).

The facing plate 85a is further provided with a plurality of openings 85a3, a first cut-away portion 85a4, and a second cut-away portion 85a5. The openings 85a3 are disposed at various places of the facing plate 85a and penetrate in the left-right direction. The first cut-away portion 85a4 is an opening obtained by cutting away a part of the facing plate 85a extending forward from a rear end of the facing plate 85a. The second cut-away portion 85a5 is an opening obtained by cutting away another part of the facing plate 85a extending forward and downward from an upper end of the facing plate 85a.

The reinforcing plate 85b is bridged from the upper side to the lower side of the first cut-away portion 85a4 to reinforce the facing plate 85a. The reinforcing plate 85b is formed of a metal plate-like member formed in a bifurcated shape. The reinforcing plate 85b is joined to the facing plate 85a by welding, for example. Note that the configuration is not limited to the configuration in which the facing plate 85a and the reinforcing plate 85b are formed separately, and for example, the facing plate 85a and the reinforcing plate 85b may be integrally formed.

The plurality of holding portions 85c are disposed at various places of the facing plate 85a. In the present embodiment, the holding portion 85c is disposed at least on a front surface 85aF of the facing plate 85a and a back surface 85aB opposite to the front surface 85aF. The front surface 85aF is located facing leftward, and the back surface 85aB is located facing rightward. However, the arrangement position of the holding portion 85c in the facing plate 85a may be any one of the front surface 85aF and the back surface 85aB.

In the present embodiment, the back surface 85aB of the facing plate 85a is also referred to as a first surface S1 or one surface SA (of the facing plate 85a). In addition, the front surface 85aF of the facing plate 85a is also referred to as a second surface S2 or the other surface SB (of the facing plate 85a). Therefore, the restricting portion 85 has the first surface S1 (the back surface 85aB of the facing plate 85a in the present embodiment) and the second surface S2 (the front surface 85aF of the facing plate 85a in the present embodiment) opposite to the first surface S1. In addition, the holding portion 85c is disposed on at least one of the first surface S1 and the second surface S2.

As described above, the restricting portion 85 is disposed on the left side of the first battery unit BU1 and the second battery unit BU2 (see Figs. 3 to 5). In addition, the left side surface BUL of each of the battery units BU is located facing leftward (see Figs. 3 and 4). Therefore, the first surface S1 and the one surface SA (both are the back surface 85aB of the facing plate 85a in the present embodiment) face the one side surface BUa (the left side surface BUL in the present embodiment) of the battery unit BU. That is, the restricting portion 85, particularly, the facing plate 85a is disposed to face the one side surface BUa of the battery unit BU.

From the viewpoint of reliably realizing the configuration in which the restricting portion 85 is disposed to face the battery unit BU, it is desirable that the restricting portion 85 have the first surface S1 (the back surface 85aB in the present embodiment) facing the battery unit BU as in the present embodiment. In addition, in the configuration in which the restricting portion 85 has, in addition to the first surface S1, the second surface S2 (the front surface 85aF in the present embodiment) opposite to the first surface S1, the following configuration is desirable from the viewpoint of improving the degree of freedom in the arrangement layout of the holding portion 85c. That is, as in the present embodiment, the holding portion 85c is desirably disposed on at least one of the first surface S1 and the second surface S2.

The plurality of holding portions 85c are disposed at various places of the reinforcing plate 85b in addition to various places of the facing plate 85a. Specifically, three holding portions 85c are disposed on the front surface 85bF of the reinforcing plate 85b. However, the number of the holding portions 85c disposed on the reinforcing plate 85b is not limited to three, and may be, for example, one or plural other than three. In addition, in place of or in addition to the front surface 85bF of the reinforcing plate 85b, at least one holding portion 85c may be disposed on the back surface 85bB of the reinforcing plate 85b.

Note that at least one holding portion 85c may be disposed in the restricting portion 85 other than the facing plate 85a and the reinforcing plate 85b. That is, for example, at least one holding portion 85c may be disposed on a coupling plate 85d coupled to the upper end portion of the facing plate 85a. The coupling plate 85d is formed by bending forward an upper end portion and a lower end portion of a metal plate-like member extending in the up-down direction. Note that the configuration of the holding portion 85c itself will be described later.

### [5. Routing Structure of Cable]

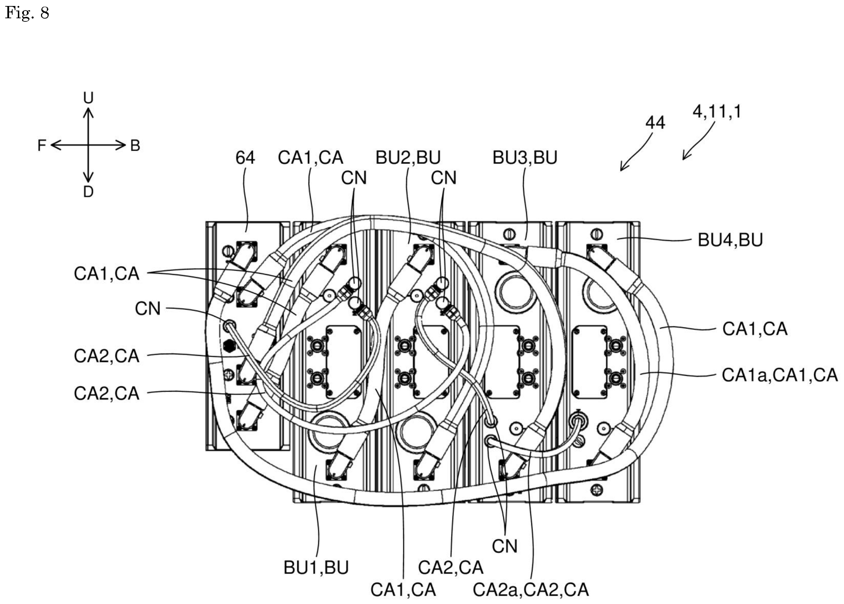

A routing structure of the cable CA will be described. In this description, first, a connection configuration of the battery unit BU to which the cable CA is connected will be described with reference to Fig. 8. Fig. 8 is a side view illustrating the connection configuration of the battery unit BU.

The plurality of battery units BU (and the PDU 64) are connected in a series and parallel combination via the cable CA. More specifically, the cable CA includes a plurality of first cables CA1 and a plurality of second cables CA2. The first cable CA1 is used for high-voltage power supply, and the second cable CA2 is used for low-voltage power supply. For example, when the case of high-voltage power supply and the case of low-voltage power supply performed on the same load (resistance) are compared with each other, a larger current flows in the case of high-voltage power supply. Therefore, in order to withstand a large current, a cable having an outer diameter larger than the outer diameter of the second cable CA2 is used for the first cable CA1. That is, the outer diameter of the first cable CA1 is larger than the outer diameter of the second cable CA2.

Each of the first cables CA1 and each of the second cables CA2 are configured without branching. However, each of the first cables CA1 and each of the second cables CA2 may include a single branch or a plurality of branches.

In each of the battery units BU, a first connection port (not illustrated) to which the first cable CA1 is connected and a second connection port (not illustrated) to which the second cable CA2 is connected are provided on the left side surface BUL.

The PDU 64 and the first battery unit BU1 are connected in series via the first cable CA1. The first battery unit BU1 and the second battery unit BU2 are connected in series via the first cable CA1. The second battery unit BU2 and the PDU 64 are connected in series via the first cable CA1. In addition, the PDU 64 and the third battery unit BU3 are connected in series via the first cable CA1. The third battery unit BU3 and the fourth battery unit BU4 are connected in series via the first cable CA1. The fourth battery unit BU4 and the PDU 64 are connected in series via the first cable CA1. That is, the first battery unit BU1 and the second battery unit BU2 are connected in series to form one pair, and the third battery unit BU3 and the fourth battery unit BU4 are also connected in series to form one pair. Then, the pairs are connected in parallel via the PDU 64.

Note that the connection configuration of the plurality of battery units BU via the first cable CA1 is not limited to the above. For example, the plurality of battery units BU may be connected to each other in series or in parallel via the plurality of first cables.

On the other hand, the PDU 64 and the first battery unit BU1 are connected via the second cable CA2. The first battery unit BU1 and the second battery unit BU2 are connected via the second cable CA2. The second battery unit BU2 and the third battery unit BU3 are connected via the second cable CA2. The third battery unit BU3 and the fourth battery unit BU4 are connected via the second cable CA2.

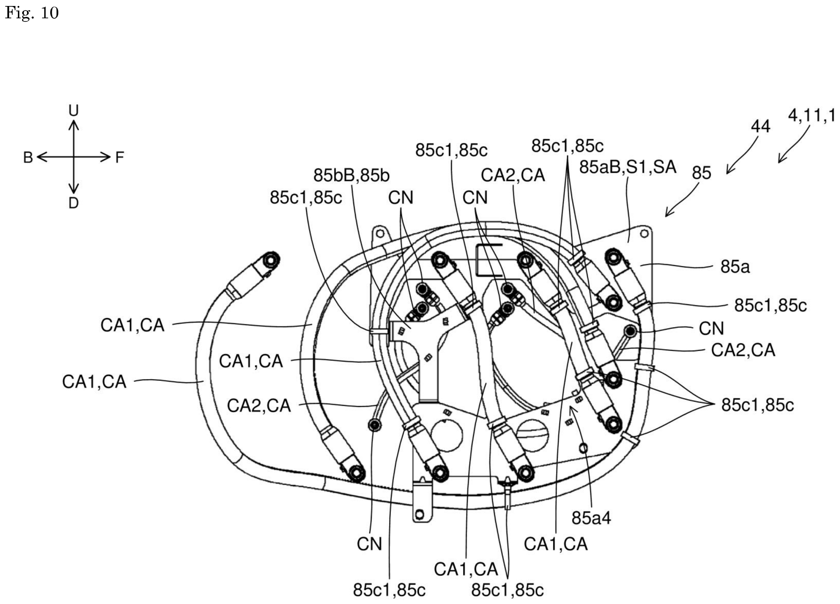

Next, a routing structure of the cable CA (the first cable CA1 and the second cable CA2) will be described with reference to Figs. 9 and 10. Figs. 9 and 10 are a left side view and a right side view illustrating the routing structure of the cable CA. Note that in Fig. 10, a specific first cable CA1a and a specific second cable CA2a to be described later are not illustrated for the sake of convenience.

The plurality of first cables CA1 excluding the specific first cable CA1a and the plurality of second cables CA2 excluding the specific second cable CA2a are routed through the plurality of holding portions 85c provided in the restricting portion 85. The specific first cable CA1a includes the first cable CA1 that connects the third battery unit BU3 and the fourth battery unit BU4. The specific second cable CA2a includes the second cable CA2 that connects the third battery unit BU3 and the fourth battery unit BU4. Note that each of all the first cables CA1 may be routed through at least one holding portion 85c. In addition, each of all the second cables CA2 may be routed through at least one holding portion 85c. Furthermore, each of all the cables CA may be routed through at least one holding portion 85c.

Hereinafter, unless otherwise specified, it is assumed that the specific first cable CA1a is excluded from the plurality of first cables CA1. That is, the plurality of first cables CA1 (each of the first cables CA1) excluding the specific first cable CA1a are (is) simply referred to as the plurality of first cables CA1 (each of the first cables CA1). In addition, it is assumed that the specific second cable CA2a is excluded from the plurality of second cables CA2. That is, the plurality of second cables CA2 (each of the second cables CA2) excluding the specific second cable CA2a are (is) simply referred to as the plurality of second cables CA2 (each of the second cables CA2).

Each of the holding portions 85c holds the first cable CA1 or the second cable CA2 passing through the holding portion 85c. That is, each of the holding portions 85c holds the cable CA. More specifically, each of the holding portions 85c includes a holding member 85c1 (see also Figs. 6 and 7). The holding member 85c1 is configured using, for example, a clip. The clip serving as the holding member 85c1 grips the first cable CA1 or the second cable CA2 passing through the clip. As a result, holding of the first cable CA1 or the second cable CA2 is realized.

However, the holding portion 85c only needs to hold the cable CA, and is not limited to the above configuration. For example, the holding portion 85c may include a clamp as the holding member 85c1. In this case, similarly to the case of the clip, the clamp grips the first cable CA1 or the second cable CA2 passing through the clamp, whereby the holding of the first cable CA1 or the second cable CA2 is realized. In addition, the holding portion 85c may include a band or a U-shaped bolt as the holding member 85c1. In this case, the first cable CA1 or the second cable CA2 is pressed against the facing plate 85a or the reinforcing plate 85b by the band or the U-shaped bolt, whereby the holding of the first cable CA1 or the second cable CA2 is realized. Note that an arrangement position of the holding member 85c1 in the facing plate 85a and the reinforcing plate 85b may be appropriately processed according to the type of the holding member 85c1. In addition, the holding portion 85c may hold the cable CA with an appropriate strength. For example, the holding portion 85c may firmly or loosely hold the cable CA.

Due to the holding of the cable CA by the holding portion 85c, for example, even if the cable CA moves (swings or vibrates) due to vibration, impact, or the like generated during the work of the hydraulic excavator 1, the degree of the movement is reduced as compared with a case where the cable CA is routed without being held. That is, the restricting portion 85 (particularly the holding portion 85c) restricts the movement of the cable CA.

According to the above configuration, it is possible to avoid a large movement of the cable CA and to prevent loosening of the connection of the cable CA to the battery unit BU. In addition, since the restricting portion 85 that restricts the movement of the cable CA is disposed to face the battery unit BU, the restricting portion 85 and the battery unit BU can be collectively disposed. That is, the restricting portion 85 can be compactly disposed near the battery unit BU. Therefore, the restriction of the movement of the cable CA (that is, prevention of the loosening of the connection between the battery unit BU and the cable CA) can be realized with a compact configuration. As described above, the loosening of the connection between the battery unit BU and the cable CA can be prevented with a compact configuration.

From the viewpoint of realizing the restriction of the movement of the cable CA by the restricting portion 85 by the holding of the cable CA by the restricting portion 85, the restricting portion 85 desirably includes the holding portion 85c that holds the cable CA as in the present embodiment.

For example, when the restricting portion 85 is disposed without being fixed, the restricting portion 85 cannot restrict the movement of the cable CA. Therefore, in order to realize the restriction of the movement of the cable CA by the restricting portion 85, it is desirable to fix the restricting portion 85 by, for example, coupling the restricting portion 85. However, when the coupling of the restricting portion 85 is limited to one of the configuration in which the restricting portion 85 is coupled to the upper plate 81, the configuration in which the restricting portion 85 is coupled to the lower plate 82, and the configuration in which the restricting portion 85 is coupled to the upper plate 81 and the lower plate 82, it may be difficult to couple the restricting portion 85. Therefore, from the viewpoint of easily coupling the restricting portion 85 and reliably fixing the restricting portion 85, it is desirable that the restricting portion 85 be coupled to at least one of the upper plate 81 and the lower plate 82 as illustrated in Fig. 3 and the like.

As described above, the lower plate 82 is supported by the turning frame 42 (see Fig. 3 and the like) via the vibration-proof member 83a (see Fig. 3 and the like). The vibration-proof member 83a reduces transmission of vibration from the turning frame 42 to the lower plate 82. In addition, the upper plate 81 and the lower plate 82 sandwich the plurality of battery units BU in the up-down direction as described above. As a result, the integration of the plurality of battery units BU, the upper plate 81, the lower plate 82, and the restricting portion 85 is enhanced. Since the cable CA is held by the restricting portion 85 (specifically the holding portion 85c), the integration of the cable CA and the plurality of battery units BU is also enhanced. Specifically, the cable CA and the plurality of battery units BU have the same vibration system.

Therefore, even if the machine body 11 (upper turning body 4) including the turning frame 42 vibrates, the vibration of the plurality of battery units BU, the upper plate 81, the lower plate 82, the restricting portion 85, and the cable CA which serve as an integrated body is suppressed. In addition, even if the integrated body slightly vibrates, particularly the plurality of battery units BU and the cable CA integrally vibrate, so that the loosening of the connection between the battery unit BU and the cable CA is also suppressed (the connection is less likely to be loosened). From such a viewpoint, as illustrated in Fig. 3 and the like, it is desirable that the lower plate 82 be supported by the machine body 11 via the vibration-proof member 83a and the battery unit BU be sandwiched by the upper plate 81 and the lower plate 82 in the up-down direction.

In particular, each of the first cables CA1 is routed through the holding member 85c1 disposed on the back surface 85aB of the facing plate 85a located to face the battery unit BU (particularly see Fig. 10). Therefore, each of the first cables CA1 is routed along the one surface SA (the back surface 85aB in the present embodiment) of the facing plate 85a. In addition, each of the second cables CA2 is routed through the holding member 85c1 disposed on the front surface 85aF of the facing plate 85a (particularly see Fig. 9). Therefore, each of the second cables CA2 is routed along the other surface SB (the front surface 85aF in the present embodiment) of the facing plate 85a.

From the viewpoint of reliably realizing the configuration in which the restricting portion 85 is disposed to face the battery unit BU, it is desirable that the restricting portion 85 include the facing plate 85a disposed to face the battery unit BU as in the present embodiment. In addition, in a case where the restricting portion 85 includes the facing plate 85a, the following configuration is desirable from the viewpoint of efficiently routing the cable CA even in a configuration in which the cable CA includes the first cable CA1 and the second cable CA2. That is, as in the present embodiment, it is desirable that the first cable CA1 be routed along the one surface SA of the facing plate 85a and the second cable CA2 be routed along the other surface SB of the facing plate 85a.

When the outer diameter of the first cable CA1 is larger than the outer diameter of the second cable CA2, the first cable CA1 may be more difficult to route than the second cable CA2 because the first cable CA1 is less bendable than the second cable CA2, for example. Therefore, in order to make the routing of the first cable CA1 as easy as possible, it is desirable to route the first cable CA1 through a position closer to the battery unit BU in preference to the second cable CA2. From this viewpoint, as in the present embodiment, it is desirable that the one surface SA (instead of the other surface SB of the facing plate 85a along which the second cable CA2 extends) of the facing plate 85a along which the first cable CA1 extends face the battery unit BU.

For the purpose of improving the degree of freedom of the routing route of the second cable CA2, a connector CN capable of electrically connecting members to be connected is used for connecting the second cable CA2. That is, the hydraulic excavator 1 includes the connector CN. The connector CN is formed in various shapes such as a linear shape and an L shape. The connector CN having an appropriate shape may be used according to the routing route of the second cable CA2.

For example, the second cable CA2 and each of the battery units BU are connected via the connector CN. The connector CN is connected to the second connection port of each of the battery units BU. As described above, the second connection port is provided on the left side surface BUL in each of the battery units BU. Therefore, the connector CN is connected to the one side surface BUa (the left side surface BUL in the present embodiment) of the battery unit BU.

From the viewpoint of easily preventing the loosening of the connection between the cable CA and the battery unit BU in the configuration in which the connector CN is connected to the one side surface BUa of the battery unit BU, it is desirable that the restricting portion 85 be disposed to face the one side surface BUa as in the present embodiment. With this configuration, since the restricting portion 85 restricts (holds the cable CA in the vicinity of the connector CN) the movement of the cable CA (the second cable CA2 in the present embodiment) in the vicinity of the connector CN, the connection between the cable CA and the battery unit BU is less likely to be loosened.

The connection between the second cable CA2 and the connector CN is realized using a fastening member such as a screw or a bolt, but is not limited thereto. For example, the connection between the second cable CA2 and the connector CN may be realized by joining by crimping, welding, or the like.

Screw portions (not illustrated) corresponding to each other are formed in the connector CN and the second connection port of the battery unit BU. For example, a male screw portion is formed in the connector CN, and a female screw portion is formed in the second connection port. However, a female screw portion may be formed in the connector CN, and a male screw portion may be formed in the second connection port.

The connector CN is inserted into the second connection port, and the screw portions of the connector CN and the second connection port are screwed with each other (specifically, the screw portion of the connector CN is rotated in a predetermined direction with respect to the screw portion of the second connection port), whereby the connector CN and the battery unit BU are connected. Note that the above screwing means that a member having a male screw and a member having a female screw are engaged and joined. On the other hand, by releasing the above screwing (specifically, rotating the screw portion of the connector CN in a direction opposite to the predetermined direction with respect to the screw portion of the second connection port), the connector CN is opened, and the connector CN can be detached. That is, the connector CN detachably connects the battery unit BU and the cable CA (the second cable CA2 in the present embodiment).

In particular, in the first battery unit BU1 and the second battery unit BU2, the second connection port is provided at a position other than a position overlapping the restricting portion 85 (particularly the facing plate 85a) in the left side surface BUL in a left side view. That is, each of the second connection ports is located to be shifted with respect to the restricting portion 85. In the present embodiment, each of the second connection ports is located inside the first cut-away portion 85a4. In other words, the opening (for example, the first cut-away portion 85a4) provided in the facing plate 85a is formed such that the second connection port can be visually recognized in the left side view. Therefore, the connector CN connected to the second connection port is disposed to be shifted with respect to the restricting portion 85 without overlapping the restricting portion 85 (particularly the facing plate 85a).

From the viewpoint of facilitating the work of attaching and detaching the cable CA to and from the battery unit BU and improving the assemblability of the hydraulic excavator 1, it is desirable that the hydraulic excavator 1 include the connector CN that detachably connects the battery unit BU and the cable CA as in the present embodiment. In particular, the following configuration is desirable from the viewpoint of facilitating access to the connector CN even from the side (left side in the present embodiment) opposite to the battery unit BU with respect to the restricting portion 85 and reliably improving the assemblability of the hydraulic excavator 1. That is, as in the present embodiment, it is desirable that the connector CN be disposed to be shifted with respect to the restricting portion 85.

Note that similarly to the connection between the second cable CA2 and each of the battery units BU, the connection between the second cable CA2 and the PDU 64 is also performed via the connector CN.

### [6. Supplement]

In the present embodiment, the case where the holding portion 85c (holding member 85c1) is provided in the restricting portion 85 and the holding portion 85c holds the cable CA to restrict the movement of the cable CA has been described, but the restriction of the movement of the cable CA is not limited thereto. For example, the movement of the cable CA may be restricted by the cable CA being caught by the restricting portion 85. In addition, the movement of the cable CA may be restricted by guiding the cable CA in a predetermined direction by the restricting portion 85.

In the present embodiment, the hydraulic excavator 1 which is a construction machine has been described as an example of the electric working machine. However, the electric working machine is not limited to the hydraulic excavator 1, and may be a construction machine such as a wheel loader. In addition, the electric working machine may be an agricultural machine such as a combine or a tractor.

### [7. Additional Note]

The hydraulic excavator 1 described in the present embodiment can also be expressed as an electric working machine described in the following additional notes.

An electric working machine according to Additional Note (1) includes:
an electric motor;
a battery unit that stores electric power for driving the electric motor;
a cable connected to the battery unit; and
a restricting portion disposed to face the battery unit,
in which the restricting portion restricts movement of the cable.

An electric working machine according to Additional Note (2) is the electric working machine according to Additional Note (1), further including
a connector that detachably connects the battery unit and the cable,
in which the connector is disposed to be shifted with respect to the restricting portion.

An electric working machine according to Additional Note (3) is the electric working machine according to Additional Note (2), in which
the connector is connected to one side surface of the battery unit, and
the restricting portion is disposed to face the one side surface.

An electric working machine according to Additional Note (4) is the electric working machine according to any one of Additional Notes (1) to (3), in which
the restricting portion includes a holding portion that holds the cable.

An electric working machine according to Additional Note (5) is the electric working machine according to Additional Note (4), in which
the restricting portion includes
a first surface that faces the battery unit, and
a second surface opposite to the first surface, and
the holding portion is disposed on at least one of the first surface and the second surface.

An electric working machine according to Additional Note (6) is the electric working machine according to any one of Additional Notes (1) to (5), in which
the restricting portion includes a facing plate disposed to face the battery unit,
the cable includes a first cable and a second cable,
the first cable is routed along one surface of the facing plate, and
the second cable is routed along the other surface of the facing plate.

An electric working machine according to Additional Note (7) is the electric working machine according to Additional Note (6), in which
an outer diameter of the first cable is larger than an outer diameter of the second cable, and
the one surface faces the battery unit.

An electric working machine according to Additional Note (8) is the electric working machine according to any one of Additional Notes (1) to (7), further including
an upper plate disposed above the battery unit, and
a lower plate disposed below the battery unit,
in which the restricting portion is disposed between the upper plate and the lower plate in an up-down direction.

An electric working machine according to Additional Note (9) is the electric working machine according to Additional Note (8), in which
the restricting portion is coupled to at least one of the upper plate and the lower plate.

An electric working machine according to Additional Note (10) is the electric working machine according to Additional Note (8) or (9), in which
the lower plate is supported by a machine body via a vibration-proof member, and
the battery unit is sandwiched between the upper plate and the lower plate in the up-down direction.

Although the embodiment of the present invention has been described above, the scope of the present invention is not limited thereto, and may be expanded or modified without departing from the gist of the invention.

### [Industrial Applicability]

The present invention is applicable to electric working machines such as construction machines and agricultural machines.

### LIST OF REFERENCE SIGNS

- 1: Hydraulic excavator (electric working machine)
- 11: Machine body
- 61: Electric motor
- 81: Upper plate
- 82: Lower plate
- 83a: Vibration-proof member
- 85: Restricting portion
- 85a: Facing plate
- 85c: Holding portion
- BU: Battery unit
- BUa: One side surface
- CA: Cable
- CA1: First cable
- CA2: Second cable
- CN: Connector
- S1: First surface
- S2: Second surface
- SA: One surface (of facing plate)
- SB: Other surface (of facing plate)

## Claims

1. An electric working machine comprising:
an electric motor;
a battery unit that stores electric power for driving the electric motor;
a cable connected to the battery unit; and
a restricting portion disposed to face the battery unit,
wherein the restricting portion restricts movement of the cable.

2. The electric working machine according to claim 1, further comprising a connector that detachably connects the battery unit and the cable,
wherein the connector is disposed to be shifted with respect to the restricting portion.

3. The electric working machine according to claim 2, wherein
the connector is connected to one side surface of the battery unit, and
the restricting portion is disposed to face the one side surface.

4. The electric working machine according to claim 1, wherein the restricting portion includes a holding portion that holds the cable.

5. The electric working machine according to claim 4, wherein
the restricting portion includes
a first surface that faces the battery unit, and
a second surface opposite to the first surface, and
the holding portion is disposed on at least one of the first surface and the second surface.

6. The electric working machine according to claim 1, wherein
the restricting portion includes a facing plate disposed to face the battery unit,
the cable includes a first cable and a second cable,
the first cable is routed along one surface of the facing plate, and
the second cable is routed along the other surface of the facing plate.

7. The electric working machine according to claim 6, wherein
an outer diameter of the first cable is larger than an outer diameter of the second cable, and
the one surface faces the battery unit.

8. The electric working machine according to any one of claims 1 to 7, further comprising:
an upper plate disposed above the battery unit; and
a lower plate disposed below the battery unit,
wherein the restricting portion is disposed between the upper plate and the lower plate in an up-down direction.

9. The electric working machine according to claim 8, wherein the restricting portion is coupled to at least one of the upper plate and the lower plate.

10. The electric working machine according to claim 8, wherein
the lower plate is supported by a machine body via a vibration-proof member, and
the battery unit is sandwiched between the upper plate and the lower plate in the up-down direction.
